# EUROPÄISCHE PATENTSCHRIFT

(11) **EP 1 006 030 B1**
(45) Veröffentlichungstag und Bekanntmachung des Hinweises auf die Patenterteilung: **27.04.2005**
(21) Anmeldenummer: 99123178.8
(22) Anmeldetag: 23.11.1999
(51) Int. Cl.: B60S 1/50, B60S 1/48, B60S 1/08, G01F 23/24

(54) **Scheibenreinigungsanlage für ein Kraftfahrzeug**
Window washing device for a vehicle
Dispositif lave-glace pour un véhicule

(30) Priorität: 05.12.1998 DE 19856176
(43) Veröffentlichungstag der Anmeldung: 07.06.2000
(73) Patentinhaber: Siemens Aktiengesellschaft, 80333 München (DE)
(72) Erfinder: Petzold, Sven, 65191 Wiesbaden (DE); Kober, Rainer, 64297 Darmstadt (DE)

(56) Entgegenhaltungen:
- WO-A-98/29285
- DE-A- 3 313 095
- DE-A- 19 501 210
- US-A- 5 493 190

## Beschreibung

Die Erfindung betrifft eine Scheibenreinigungsanlage für ein Kraftfahrzeug mit zumindest einer an oder in einem Waschflüssigkeitsbehälter angeordneten, von einer elektronischen Steuerungseinheit ansteuerbaren Waschflüssigkeitspumpe mit einem von einer weiteren elektronischen Steuerungseinheit ansteuerbaren Scheibenwischer, wobei die Steuerungseinheiten eine bauliche Einheit bilden und wobei zumindest eine weitere elektronische Steuerungseinheit einer Heizeinrichtung für die Waschflüssigkeit eines motorischen Antriebs für verfahrbare Waschdüsen oder eines Mehrwegeventils zur Verteilung der Waschflüssigkeit mit den Steuerungseinheiten der Waschflüssigkeitspumpe und des Scheibenwischermotors eine bauliche Einheit bildet.

Aus der WO 98/29285 ist eine solche Scheibenreinigungsanlage bekannt. Bei dieser Scheibenreinigungsanlage befindet sich in einem Waschflüssigkeitsbehälter eine Waschflüssigkeitspumpe für eine Frontscheibe des Kraftfahrzeuges. Die Frontscheibe läßt sich von einem Scheibenwischer wischen. Die Waschflüssigkeitspumpe und der oder die Scheibenwischer lassen sich unabhängig voneinander von innerhalb der Fahrgastzelle des Kraftfahrzeuges angeordneten Bedienelementen ansteuern. Eine elektronische Steuerungseinheit zur Ansteuerung eines Motors des Scheibenwischers wird zur Ansteuerung der Waschflüssigkeitspumpe eingesetzt und steuert ein Ventil zur Verteilung von Waschflüssigkeit an.

Scheibenreinigungsanlagen heutiger Kraftfahrzeuge weisen jedoch häufig weitere elektronische Steuerungseinheiten, beispielsweise zur Ansteuerung von Heizelementen für Waschdüsen auf. Diese Steuerungseinheiten müssen mit der Steuerungseinheit der bekannten Scheibenreinigungsanlage bei der Montage im Kraftfahrzeug aufwändig miteinander verbunden werden. Weiterhin müssen die einzelnen Steuerungseinheiten der Scheibenreinigungsanlage für eine Vorprüfung vor der Montage im Kraftfahrzeug zunächst zusammengesetzt und anschließend wieder getrennt werden. Hierfür sind sehr viele Arbeitsschritte erforderlich.

Der Erfindung liegt das Problem zugrunde, eine Scheibenreinigungsanlage der eingangs genannten Art so zu gestalten, daß sie möglichst einfach im Kraftfahrzeug montiert werden kann und sich sehr einfach vor der Montage im Kraftfahrzeug testen läßt.

Dieses Problem wird erfindungsgemäß dadurch gelöst, daß eine Auswerteeinrichtung eines Füllstandsensors mit den Steuerungseinheitender Waschflüssigkeitspumpe und des Scheibenwischers eine bauliche Einheit bildet.

Durch diese Gestaltung lassen sich die Steuerungseinheiten der erfindungsgemäßen Scheibenreinigungsanlage außerhalb des Kraftfahrzeuges zu der baulichen Einheit mit sämtlichen Bauteilen von motorischen Antrieben, Heizeinrichtungen und Ventilen vormontieren und testen. Nach dem Testen ist es dank der Erfindung nicht mehr erforderlich, die Steuerungseinheiten voneinander zu trennen, da sich die bauliche Einheit in einem Arbeitsgang montieren läßt. Hierdurch gestaltet sich die Montage der erfindungsgemäßen Scheibenreinigungsanlage im Kraftfahrzeug sehr einfach. Da hierdurch die Steuerungseinheiten für verschiedene Bauteile der Scheibenreinigungsanlage nahe nebeneinander angeordnet sind, gestalten sich Verdrahtungen der Steuerungseinheiten untereinander besonders kostengünstig. Damit läßt sich beispielsweise sehr einfach der Betrieb des Scheibenwischers, der Waschdüsen und der Heizeinrichtung synchronisieren oder beispielsweise nur noch eine einzige Versorgungsleitung für elektrischen Strom der Steuerungseinheiten vorsehen. Weiterhin können dank der Erfindung die Steuerungseinheiten und die Auswerteeinrichtung des Füllstandsensors gemeinsame Hardware wie beispielsweise einen Prozessor und eine gemeinsame Software aufweisen.

Die bauliche Einheit der Steuerungseinheiten kann zur Befestigung an einer nahezu beliebigen Stelle des Kraftfahrzeuges vorgesehen sein. Zur Vereinfachung des Testens der erfindungsgemäßen Scheibenreinigungsanlage vor der Montage im Kraftfahrzeug trägt es jedoch bei, wenn die Steuerungseinheiten an dem Waschflüssigkeitsbehälter befestigt sind. Ein weiterer Vorteil der erfindungsgemäßen Scheibenreinigungsanlage besteht darin, daß sich die Versorgungsleitungen sehr kurz bemessen lassen. Da insbesondere die Pumpe für die Scheinwerferreinigungsanlage Anlaufströme von 30 bis 50 Ampere erfordert, sind die Versorgungsleitungen mit einem großen Querschnitt zu versehen. Deshalb führt eine Verringerung der Länge der Versorgungsleitungen zu einer großen Verringerung der Herstellungskosten der erfindungsgemäßen Scheibenreinigungsanlage.

Mehrere Füllstände im Waschflüssigkeitsbehälter lassen sich gemäß einer anderen vorteilhaften Weiterbildung der Erfindung mit besonders geringem baulichen Aufwand messen, wenn der Füllstandsensor mehrere in die Wandung des Füllstandes eingelassene Kontaktplättchen zur Leitfähigkeitsmessung hat. Da hierbei der Füllstandsensor und die am Waschflüssigkeitsbehälter angeordnete Auswerteeinrichtung nahe beieinander angeordnet sind, führt diese Gestaltung zu einer besonders kostengünstigen Fertigung der erfindungsgemäßen Scheibenreinigungsanlage.

Die Montage der erfindungsgemäßen Scheibenreinigungsanlage im Kraftfahrzeug läßt sich weiter vereinfachen, wenn die elektronischen Steuerungseinheiten und die Auswerteeinrichtung des Füllstandsensors eine gemeinsame Anschlußbuchse aufweisen. Weiterhin lassen sich durch diese Gestaltung die einzelnen Bauteile der erfindungsgemäßen Scheibenreinigungsanlage sehr einfach mit einem Datenbus verbinden.

Die elektronischen Steuerungen sind gemäß einer anderen vorteilhaften Weiterbildung der Erfindung mit geringem baulichen Aufwand vor einer Beschädigung geschützt, wenn der Waschflüssigkeitsbehälter eine Wanne zur Aufnahme der elektronischen Steuerungseinheiten oder der elektronischen Steuerungseinheit hat.

Der Waschflüssigkeitsbehälter gestaltet sich gemäß einer anderen vorteilhaften Weiterbildung der Erfindung konstruktiv besonders einfach, wenn die Wanne von einem in dem Waschflüssigkeitsbehälter verrastbaren Deckel verschließbar ist.

Der Deckel läßt sich gemäß einer anderen vorteilhaften Weiterbildung der Erfindung besonders kostengünstig zusammen mit dem Waschflüssigkeitsbehälter fertigen, wenn der Deckel an einer Seite über ein Filmscharnier mit dem Waschflüssigkeitsbehälter verbunden ist. Weiterhin wird durch diese Gestaltung die Montage der erfindungsgemäßen Scheibenreinigungsanlage vereinfacht. Der Deckel kann zudem nicht verlorengehen.

Eine Überfüllwarnung oder eine Nachfüllanzeige für den Waschflüssigkeitsbehälter läßt sich gemäß einer anderen vorteilhaften Weiterbildung der Erfindung mit besonders geringem baulichen Aufwand erzeugen, wenn an der Auswerteeinrichtung des Füllstandsensors eine optische oder akustische Signaleinrichtung zum Erzeugen einer Überfüllwarnung und/oder eines Signals bei einer Unterschreitung eines Mindestfüllstandes angeordnet ist. Hierdurch ist ein nur unwesentlicher Aufwand für die Verdrahtung der Signaleinrichtung erforderlich. Weiterhin läßt sich dank der Erfindung der Waschflüssigkeitsbehälter für den Nachfüllenden problemlos identifizieren. Die leichte Identifizierung vereinfacht insbesondere bei einem Waschflüssigkeitsbehälter mit getrennten Kammern für Wasser, Reinigungskonzentrat und Frostschutz das Nachfüllen. Als Signaleinrichtung eignet sich insbesondere ein Summer und eine Leuchtdiode.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine schematische Darstellung einer erfindungsgemäßen Scheibenreinigungsanlage,
- Fig.2: eine weitere Ausführungsform der erfindungsgemäßen Scheibenreinigungsanlage,
- Fig.3: die Scheibenreinigungsanlage aus Figur 2 in einer Schnittdarstellung entlang der Linie III - III.

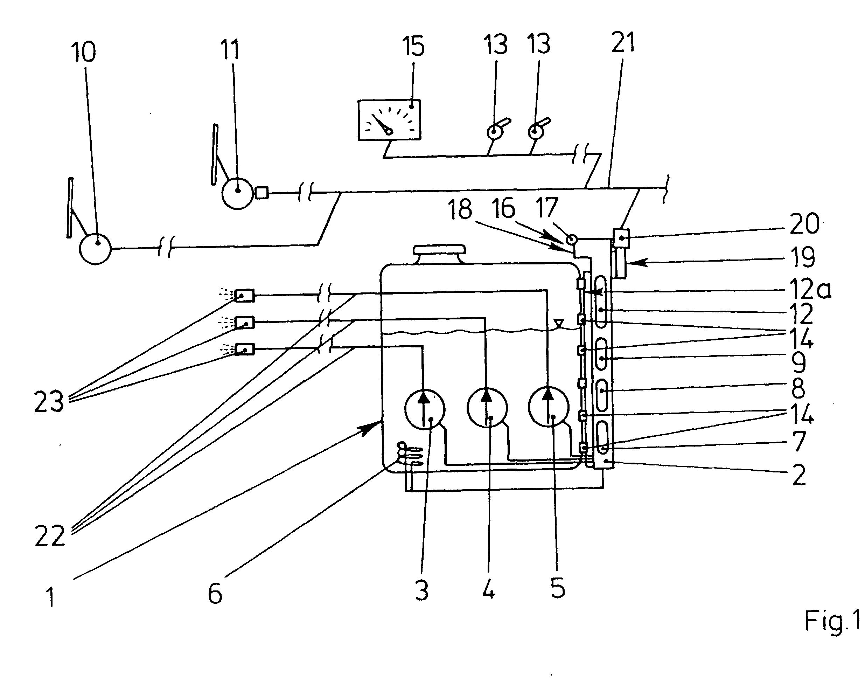

Die Figur 1 zeigt schematisch eine erfindungsgemäße Scheibenreinigungsanlage mit einem Waschflüssigkeitsbehälter 1 und einer elektronischen Zentraleinheit 2. Der Waschflüssigkeitsbehälter 1 hat drei Waschflüssigkeits pumpen 3 - 5 und eine Heizeinrichtung 6. Innerhalb der elektronischen Zentraleinheit 2 sind jeweils eine elektronische Steuerungseinheit 7 - 9 für die Waschflüssigkeitspumpen 3 - 5, die Heizeinrichtung 6 und für zwei Scheibenwischer 10, 11 angeordnet. Selbstverständlich kann die erfindungsgemäße Scheibenreinigungsanlage weitere Steuerungseinheiten beispielsweise zum Verfahren von Waschdüsen oder zum Schalten eines Mehrwegeventils für eine Verteilung von Waschflüssigkeit aufweisen. Weiterhin weist die Zentraleinheit 2 eine Auswerteeinrichtung 12 eines Füllstandsensors 12a zur Erfassung eines Füllstandes von Waschflüssigkeit in dem Waschflüssigkeitsbehälter 1 auf. Die Scheibenwischer 10, 11 und die Waschflüssigkeitspumpen 3 - 5 lassen sich von Bedienelementen 13 schalten. Selbstverständlich können die Scheibenwischer 10, 11 zusätzlich von einem nicht dargestellten Regensensor angesteuert werden. Die Heizeinrichtung 6 wird von einer der elektronischen Steuerungseinheiten 7 - 9 in Abhängigkeit von der Außentemperatur geschaltet. Hierdurch wird die erfindungsgemäße Scheibenreinigungsanlage vor einem Einfrieren geschützt.

Die Auswerteeinrichtung 12 des Füllstandsensors 12a hat mehrere die Wandung des Waschflüssigkeitsbehälters 1 durchdringende Kontaktplättchen 14 und erzeugt mittels einer Leitfähigkeitsmessung elektrische Signale in Abhängigkeit von dem Füllstand der Waschflüssigkeit im Waschflüssigkeitsbehälter 1. Die elektrischen Signale werden anschließend ausgewertet und zu einer Anzeige 15 für einen Fahrerplatz des Kraftfahrzeuges oder zu einer Signaleinrichtung 16 mit einer Leuchtdiode 17 und einem Summer 18 gesendet. Hierdurch wird wahlweise eine Überfüllwarnung oder ein Nachfüllerfordernis signalisiert. Das Nachfüllerfordernis kann hierbei permanent oder beispielsweise nur während des Nachfüllens eines Kraftstoffbehälters des Kraftfahrzeuges angezeigt werden.

Die elektronischen Steuerungseinheiten 7 - 9 und die Auswerteeinrichtung 12 haben eine gemeinsame, an der Oberseite der Zentraleinheit 2 angeordnete Anschlußbuchse 19 für einen Stecker 20 eines Leitungsnetzes 21 des Kraftfahrzeuges. Das Leitungsnetz 21 ist als Datenbus ausgebildet und verbindet alle elektrischen Bauteile der erfindungsgemäßen Scheibenreinigungsanlage. Weiterhin werden die elektrischen Bauteile über das Leitungsnetz mit elektrischem Strom versorgt.

Die Waschflüssigkeitspumpen 3 - 5 dienen zum Fördern von Waschflüssigkeit aus dem Waschflüssigkeitsbehälter 1 über Waschflüssigkeitsleitungen 22 zu vor nicht dargestellten Scheiben anzuordnenden Waschdüsen 23. Die Anzeige 15 und die Bedienelemente 13 sind zur Anordnung in einer nicht dargestellten Fahrgastzelle des Kraftfahrzeuges vorgesehen.

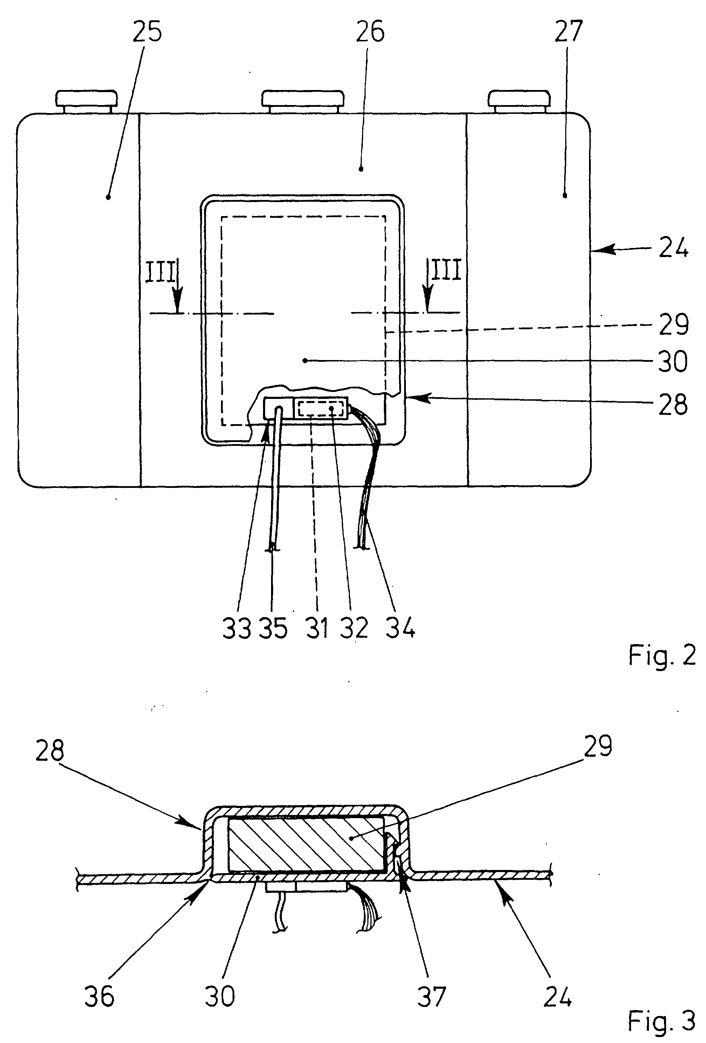

Die Figur 2 zeigt einen Waschflüssigkeitsbehälter 24 mit jeweils getrennten Kammern 25 - 27 für Wasser, Reinigungskonzentrat und Frostschutz. Der Waschflüssigkeitsbehälter 24 hat eine Wanne 28 zur Aufnahme einer gemeinsamen elektronischen Steuerungseinheit 29 für die in Figur 1 dargestellten Scheibenwischer 10, 11 und die Waschflüssigkeitspumpen 3 - 5. Die Steuerungseinheit 29 ist von einem Deckel 30 geschützt. Weiterhin hat die elektronische Steuerungseinheit 29 eine Anschlußbuchse 31 für einen Stecker 32 eines Datenbusses 34 und einen Anschluß 33 für Versorgungsleitungen 35 aller am oder im Waschflüssigkeitsbehälter 24 angeordneten Bauteile der Scheibenreinigungsanlage mit elektrischem Strom.

Die Figur 3 zeigt den Waschflüssigkeitsbehälter 24 aus Figur 2 in einer Schnittdarstellung entlang der Linie III - III. Hierbei ist zu erkennen, daß die elektronische Steuerungseinheit 29 zwischen dem Deckel 30 und dem Waschflüssigkeitsbehälter 24 eingespannt ist. Eine nicht dargestellte Dichtung und eine Tauchlackierung der elektronischen Steuereinheit 29 gewährleisten einen ausreichenden Schutz gegen Feuchtigkeit. Der Deckel 30 ist über ein Filmscharnier 36 mit dem Waschflüssigkeitsbehälter 24 verbunden und hat an seinem dem Filmscharnier 36 gegenüberliegenden Ende eine Rastverbindung 37 mit dem Waschflüssigkeitsbehälter 24.

## Patentansprüche

1. Scheibenreinigungsanlage für ein Kraftfahrzeug mit zumindest einer an oder in einem Waschflüssigkeitsbehälter (1, 24) angeordneten, von einer elektronischen Steuerungseinheit (7-9, 29) ansteuerbaren Waschflüssigkeitspumpe (3 - 5) mit einem von einer weiteren elektronischen Steuerungseinheit (7-9, 29) ansteuerbaren Scheibenwischer (10, 11), wobei die Steuerungseinheiten (7-9, 29) eine bauliche Einheit bilden, und wobei zumindest eine weitere elektronische Steuerungseinheit (7-9, 29) einer Heizeinrichtung (6) für die Waschflüssigkeit, eines motorischen Antriebs für verfahrbare Waschdüsen oder eines Mehrwegeventils zur Verteilung der Waschflüssigkeit mit den Steuerungseinheiten (7-9, 29) der Waschflüssigkeitspumpe und des Scheibenwischermotors eine bauliche Einheit bildet, **dadurch gekennzeichnet, dass** eine Auswerteeinrichtung (12) eines Füllstandsensors (12a) mit den Steuerungseinheiten (7-9) der Waschflüssigkeitspumpe (3-5) und des Scheibenwischers (10, 11) eine bauliche Einheit bildet.

2. Scheibenreinigungsanlage nach Anspruch 1, **dadurch gekennzeichnet, dass** die Steuerungseinheiten (7-9, 29) an dem Waschflüssigkeitsbehälter (1, 24) befestigt sind.

3. Scheibenreinigungsanlage nach Anspruch 1 oder 2, **dadurch gekennzeichnet, dass** der Füllstandsensor (12a) mehrere in die Wandung des Waschflüssigkeitsbehälters (1) eingelassene Kontaktplättchen (14) zur Leitfähigkeitsmessung hat.

4. Scheibenreinigungsanlage nach zumindest einem der vorhergehenden Ansprüche, **dadurch gekennzeichnet, dass** die elektronischen Steuerungseinheiten (7-9, 29) und die Auswerteeinrichtung (12) des Füllstandsensors (12a) eine gemeinsame Anschlussbuchse (19, 31) aufweisen.

5. Scheibenreinigungsanlage nach zumindest einem der vorhergehenden Ansprüche, **dadurch gekennzeichnet, dass** der Waschflüssigkeitsbehälter (24) eine Wanne (28) zur Aufnahme der elektronischen Steuerungseinheiten oder der elektronischen Steuerungseinheit (29) hat.

6. Scheibenreinigungsanlage nach Anspruch 5, **dadurch gekennzeichnet, dass** die Wanne (28) von einem in dem Waschflüssigkeitsbehälter (24) verrastbaren Deckel (30) verschließbar ist.

7. Scheibenreinigungsanlage nach Anspruch 6, **dadurch gekennzeichnet, dass** der Deckel (30) an einer Seite über ein Filmscharnier (36) mit dem Waschflüssigkeitsbehälter (24) verbunden ist.

8. Scheibenreinigungsanlage nach zumindest einem der vorhergehenden Ansprüche, **dadurch gekennzeichnet, dass** an der Auswerteeinrichtung (12) des Füllstandsensors (12a) eine optische oder akustische Signaleinrichtung (16) zum Erzeugen einer Überfüllwarnung und/oder eines Signals bei einer Unterschreitung eines Mindestfüllstandes angeordnet ist.

## Claims

1. Window cleaning system for a motor vehicle, having at least one washer fluid pump (3-5) which is arranged on or in a washer fluid container (1, 24), can be activated by an electronic control unit (7-9, 29) and has a wiper (10, 11) which can be activated by a further electronic control unit (7-9, 29), the control units (7-9, 29) forming a constructional unit, and at least one further electronic control unit (7-9, 29) of a heating device (6) for the washer fluid, of a motor drive for moveable washer nozzles, or of a multiway valve for distributing the washer fluid forms a constructional unit together with the control units (7-9, 29) of the washer fluid pump and of the wiper motor, **characterized in that** an evaluating device (12) of a fluid-level sensor (12a) forms a constructional unit together with the control units (7-9) of the washer fluid pump (3-5) and of the wiper (10, 11).

2. Window cleaning system according to Claim 1, **characterized in that** the control units (7-9, 29) are fastened on the washer fluid container (1, 24).

3. Window cleaning system according to Claim 1 or 2, **characterized in that** the fluid-level sensor (12a) has a plurality of contact plates (14) embedded in the wall of the washer fluid container (1), for measuring the conductivity.

4. Window cleaning system according to at least one of the preceding claims, **characterized in that** the electronic control units (7-9, 29) and the evaluating device (12) of the fluid-level sensor (12a) have a common connecting socket (19, 31).

5. Window cleaning system according to at least one of the preceding claims, **characterized in that** the washer fluid container (24) has a trough (28) for accommodating the electronic control units or the electronic control unit (29).

6. Window cleaning system according to Claim 5, **characterized in that** the trough (28) can be closed by a lid (30) which can be latched in the washer fluid container (24).

7. Window cleaning system according to Claim 6, **characterized in that** the lid (30) is connected to the washer fluid container (24) on one side via a film hinge (36).

8. Window cleaning system according to at least one of the preceding claims, **characterized in that** an optical or acoustic signalling device (16) for generating an overfilling warning and/or a signal when the fluid level falls short of the minimum is arranged on the evaluating device (12) of the fluid-level sensor (12a).

## Revendications

1. Dispositif lave-glace pour un véhicule automobile comportant, au moins, une pompe pour le liquide lave-glace (3 - 5), montée sur ou dans un réservoir de liquide lave-glace (1, 24) et contrôlée par une unité électronique de commande (7 - 9, 29), et un essuie-glace (10 - 11) contrôlé par une autre unité électronique de commande (7 - 9, 29), où les unités de commande (7 - 9, 29) forment une unité constructive et où, au moins, une autre unité de commande électronique (7 - 9, 29) d'un système de chauffage (6) du liquide lave-glace, d'un entraînement motorisé pour des gicleurs escamotables ou d'une vanne multivoie destinée à la distribution du liquide lave-glace forme une unité constructive avec les unités de commande (7 - 9, 29) de la pompe pour le liquide lave-glace et le moteur des essuie-glaces **caractérisé par le fait qu'**un dispositif d'évaluation (12) d'un capteur (12a) du niveau de remplissage forme une unité constructive avec les unités de commande (7 - 9) de la pompe à liquide lave-glace (3 - 5) et de l'essuie-glace (10, 11).

2. Dispositif lave-glace selon la revendication 1 **caractérisé par le fait que** les unités de commande (7 - 9, 29) s ont fixées au réservoir de liquide lave-glace (1, 24).

3. Dispositif lave-glace selon la revendication 1 ou 2 **caractérisé par le fait que** le capteur (12a) du niveau de remplissage a plusieurs plaquettes de contact (14), qui sont intégrées dans la paroi du réservoir de liquide lave-glace (1), pour la mesure de la conductivité.

4. Dispositif lave-glace selon au moins l'une des revendications précédentes **caractérisé par le fait que** les unités électroniques de commande (7 - 9, 29) et le dispositif d'évaluation (12) du capteur (12a) du niveau de remplissage ont une douille commune (19, 31) de raccordement.

5. Dispositif lave-glace selon au moins l'une des revendications précédentes **caractérisé par le fait que** le réservoir de liquide lave-glace (24) a une cuve destinée à recevoir les unités électroniques de commande ou l'unité électronique de commande (29).

6. Dispositif lave-glace selon la revendication 5 **caractérisé par le fait que** la cuve (28) peut être fermée par un couvercle (30) qui s'encliquette dans le réservoir de liquide lave-glace (24).

7. Dispositif lave-glace selon la revendication 6 **caractérisé par le fait que** le couvercle (30) est fixé sur un côté, par l'intermédiaire d'une charnière à membrane (36), au réservoir de liquide lave-glace (24).

8. Dispositif lave-glace selon au moins l'une des revendications précédentes **caractérisé par le fait qu'**un dispositif de signalisation (16) optique ou acoustique est monté sur le dispositif d'évaluation (12) du capteur (12a) du niveau de remplissage pour générer une mise en garde de débordement et/ou un signal dans le cas d'un dépassement vers le bas d'un niveau minimum de remplissage.
